(19) Europäisches Patentamt
European Patent Office
Office européen des brevets

(11) **EP 2 407 236 A1**

(12) **EUROPEAN PATENT APPLICATION**

(43) Date of publication:
**18.01.2012 Bulletin 2012/03**

(51) Int Cl.:
*B01J 21/06* (2006.01)          *B01J 27/20* (2006.01)
*B01J 27/12* (2006.01)          *B01J 27/02* (2006.01)
*B01J 35/00* (2006.01)          *B01J 35/02* (2006.01)
*B01J 37/02* (2006.01)          *B01D 53/00* (2006.01)
*C09D 5/00* (2006.01)

(21) Application number: **10169370.3**

(22) Date of filing: **13.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Theta Chemicals Limited**
**Claremorris**
**Mayo (IE)**

(72) Inventors:
• **Gannon, Paul**
  **Castlebar (IE)**
• **O'Keeffe, Cormac**
  **Kanturk (IE)**

(54) **Photocatalyst comprising a doped material**

(57)     A doped material comprises $TiO_2$ and three non-metal dopants. The first non-metal dopant comprises sulfur, the second non-metal dopant comprises fluorine, and the third non-metal dopant comprises carbon. The sulfur dopant comprises a cationic dopant, the carbon dopant comprises a cationic dopant, and the fluorine dopant comprises an anionic dopant. The molar ratio of the $TiO_2$ to the sulfur is approximately 99.75 : 0.25. The molar ratio of the $TiO_2$ to the fluorine is approximately 99.1 : 0.9. The molar ratio of the $TiO_2$ to the carbon is approximately 98.7 : 1.3. The material has a transparent, lateral growth crystalline atomic structure. The crystallite particle size is approximately 1 nm. The material is soluble to facilitate dissolving of the material in a solvent without requiring any dispersants to form a true solution.

**Fig. 16**

**Description**

Introduction

This invention relates to a doped material.

Statements of Invention

According to the invention there is provided a doped material comprising
a metal oxide, and
one or more dopants,
at least one of the dopants being a non-metal,
the material being soluble to facilitate dissolving of the material in a solvent to form a solution.

In one embodiment of the invention the metal of the metal oxide is selected from the group comprising titanium (Ti), tin (Sn), tungsten (W), and zirconium (Zr). Preferably the metal oxide is selected from the group comprising $TiO_2$, $SnO_2$, $WO_3$, and $ZrO_2$. The metal oxide may comprise $TiO_2$ with substantially all of the $TiO_2$ in rutile phase. The metal oxide may comprise $TiO_2$ with substantially all of the $TiO_2$ in anatase phase. The metal oxide may comprise $TiO_2$ with part of the $TiO_2$ in rutile phase and part of the $TiO_2$ in anatase phase.

In another embodiment the non-metal dopant is selected from the group comprising sulfur, carbon, nitrogen, phosphorus, fluorine, chlorine, bromine, iodine, selenium, and astatine. The non-metal dopant may comprise an anionic dopant. The non-metal dopant may comprise a cationic dopant. Preferably the material comprises at least two non-metal dopants. Ideally the material comprises at least three non-metal dopants. Most preferably the first non-metal dopant comprises sulfur, the second non-metal dopant comprises fluorine, and the third non-metal dopant comprises carbon.

In one case the molar ratio of the metal oxide to the non-metal dopant is in the range of from 99.9 : 0.1 to 97.5 : 2.5. The non-metal dopant may comprise sulfur, and the molar ratio of the metal oxide to the non-metal dopant may be in the range of from 99.9 : 0.1 to 98.5 : 1.5. Preferably the molar ratio of the metal oxide to the non-metal dopant is approximately 99.75 : 0.25. The non-metal dopant may comprise carbon, and the molar ratio of the metal oxide to the non-metal dopant may be in the range of from 99.5 : 0.5 to 97.5 : 2.5. Preferably the molar ratio of the metal oxide to the non-metal dopant is approximately 98.7 : 1.3. The non-metal dopant may comprise fluorine, and the molar ratio of the metal oxide to the non-metal dopant may be in the range of from 99.5 : 0.5 to 98 : 2. Preferably the molar ratio of the metal oxide to the non-metal dopant is approximately 99.1 : 0.9.

The material may comprise two or more dopants, and at least one of the dopants may be a metal.

In another case the material is soluble to facilitate dissolving of the material in a solvent selected from the group comprising water, acetone, trifluoroacetic acid, ethyl acetate, 3-propanone, glacial acetic acid, and tetrahydrofuran. Preferably the material is soluble to facilitate dissolving of the material in a solvent without any dispersants to form a true solution.

In one embodiment the material has a crystalline atomic structure. Preferably the material has a lateral growth crystalline atomic structure. In this manner a smooth and uniform crystal structure may be obtained. Ideally the material has a transparent crystalline atomic structure. Most preferably the crystallite particle size is in the range of from 0.75 nm to 1.75 nm. The small particle size results in a soluble material. The crystallite particle size may be approximately 1 nm.

In another embodiment the material is a photocatalytic material. Preferably the material is photocatalytically active upon activation by visible light. Ideally the material is photocatalytically active upon activation by visible light having a wavelength in the range of from 380 nm to 780 nm. Most preferably the material degrades organic matter upon activation by visible light. In this manner the material is effectively self-cleaning. The material may degrade microbiological matter upon activation by visible light. Preferably the material generates reactive oxygen species upon activation by visible light. Most preferably the material generates hydroxyl radicals and/or superoxide ions upon activation by visible light. Ideally the material reduces the concentration of pollutant gases upon activation by visible light. Most preferably the material reduces the concentration of pollutant gases selected from the group comprising nitrogen oxides, sulphur oxides, carbon oxides, ammonia, volatile organic carbons, and tobacco smoke. The material may inhibit formation of pollutant gases upon activation by visible light. Preferably the material inhibits formation of pollutant gases selected from the group comprising nitrogen oxides, sulphur oxides, carbon oxides, ammonia, volatile organic carbons, and tobacco smoke. Ideally the material becomes superhydrophilic upon activation by visible light. In this manner the material is effectively self-cleaning.

The invention also provides in another aspect a structural component comprising a doped material of the invention.

In one embodiment of the invention the structural component comprises a coating layer, the coating layer comprising a doped material of the invention. Preferably the contact angle defined between a droplet of a liquid resting upon the surface of the coating layer and the surface of the coating layer is less than 25°. Ideally the contact angle is less than 10°. Most preferably the contact angle is less than 5°. In this manner the coating layer is superhydrophilic and effectively self-cleaning.

The structural component may comprise at least part of a tile element. The structural component may comprise at least part of a glass element. The structural component may comprise grout.

In a further aspect of the invention there is provided a use of a doped material of the invention for coating a surface.

The use of the doped material may be for coating a surface of a tile element. The use of the doped material may be for coating a surface of a glass element. The use of the doped material may be for grouting a cavity.

In one embodiment of the invention the use of the doped material is as a catalyst. Preferably the use of the doped material is as a photocatalyst. Ideally the use of the doped material is for degrading organic matter. In this manner the material is effectively self-cleaning. Most preferably the use of the doped material is for degrading microbiological matter. The use of the doped material may be for reducing the concentration of pollutant gases. The use of the doped material may be for inhibiting formation of pollutant gases.

Brief Description of the Drawings

The invention will be more clearly understood from the following description of an embodiment thereof, given by way of example only, with reference to the accompanying drawings, in which:

Fig. 1 is a schematic illustration of the photoreductive mechanism of resazurin dye,

Fig. 2 is a table of results of Escherichia coli survival testing,

Fig. 3 is a graph of results of Escherichia coli survival testing,

Fig. 4 is a graph of the calibration of response versus $NO_2$ concentration,

Fig. 5 is a schematic illustration of the difference between hydrophilic and hydrophobic surfaces,

Fig. 6 is a schematic illustration of a superhydrophilic surface with increased hydrogen bonding,

Fig. 7 is a photograph illustrating the superhydrophilicty of multi-doped $TiO_2$ coated tiles,

Fig. 8(a) is a graph of infrared spectrum of a washed and dried hydrous $TiO_2$,

Fig. 8(b) is a graph of x-ray diffraction pattern of a washed and dried hydrous $TiO_2$,

Fig. 9(a) is a graph of infrared spectrum of solubilised $TiO_2$,

Fig. 9(b) is a graph of x-ray diffraction pattern of solubilised $TiO_2$,

Fig. 10 is a schematic illustration of a sulfur doping mechanism,

Fig. 11(a) is a graph of infrared spectrum of sulfur doped $TiO_2$,

Fig. 11(b) is a graph of x-ray diffraction pattern of sulfur doped $TiO_2$,

Fig. 12(a) is a graph of x-ray photoelectron spectroscopy spectrum of sulfur in a multi-doped $TiO_2$ film,

Fig. 12(b) is a graph of x-ray photoelectron spectroscopy spectrum of fluorine in a multi-doped $TiO_2$ film,

Fig. 12(c) is a graph of x-ray photoelectron spectroscopy spectrum of carbon in a multi-doped $TiO_2$ film,

Fig. 13 is a graph of x-ray diffraction pattern of sulfur doped $TiO_2$ film applied to a ceramic tile and a sulfur doped $TiO_2$ powder,

Fig. 14 is a schematic illustration of the photoresponse of $TiO_2$ by visible light,

Fig. 15 is a graph of x-ray diffraction pattern of multidoped $TiO_2$ material,

Fig. 16(a) is a photograph of a material according to the invention,

Fig. 16(b) is a photograph of another material,

Fig. 17 is a schematic illustration of a sulfur doping mechanism,

Fig. 18 illustrates multi-doping of $TiO_2$,

Fig. 19 is a schematic illustration of photoexcitation of an electron,

Fig. 20 is a schematic illustration of generation of reactive oxygen species, and

Fig. 21 is a schematic illustration of a contact angle of a droplet.

Detailed Description

Referring to the drawings, there is disclosed herein a doped photocatalytic material according to the invention, and a method of forming a doped photocatalytic material according to the invention.

The material comprises a metal oxide and one or more dopants. In this case the metal of the metal oxide is selected from the group comprising titanium (Ti), tin (Sn), tungsten (W), and zirconium (Zr). The metal oxide may be selected from the group comprising $TiO_2$, $SnO_2$, $WO_3$, and $ZrO_2$. In one example the metal oxide comprises $TiO_2$ with substantially all of the $TiO_2$ in rutile phase. The metal oxide may alternatively comprise $TiO_2$ with substantially all of the $TiO_2$ in anatase phase. The metal oxide may alternatively comprise $TiO_2$ with part of the $TiO_2$ in rutile phase and part of the $TiO_2$ in anatase phase.

In this case the material comprises three dopants, each dopant being a non-metal. Each non-metal dopant may be selected from the group comprising sulfur, carbon, nitrogen, phosphorus, fluorine, chlorine, bromine, iodine, selenium, and astatine. In one example the first non-metal dopant comprises sulfur, the second non-metal dopant comprises fluorine, and the third non-metal dopant comprises carbon. The invention enables multi-doping of $TiO_2$ with three or more dopants. In this case there is multi-doping of $TiO_2$ with sulfur, fluorine and carbon. The sulfur dopant comprises a cationic dopant, the carbon dopant comprises a cationic dopant, and the fluorine dopant comprises an anionic dopant. The molar ratio of the $TiO_2$ to each non-metal dopant is in the range of from 99.9 : 0.1 to 97.5 : 2.5. The molar ratio of the $TiO_2$ to the sulfur is in the range of from 99.9 : 0.1 to 98.5 : 1.5. In one example the molar ratio of the $TiO_2$ to the sulfur is approximately 99.75 : 0.25. The molar ratio of the $TiO_2$ to the fluorine is in the range of from 99.5 : 0.5 to 98 : 2. In one example the molar ratio of the $TiO_2$ to the fluorine is approximately 99.1 : 0.9. The molar ratio of the $TiO_2$ to the carbon is in the range of from 99.5 : 0.5 to 97.5 : 2.5. In one example the molar ratio of the $TiO_2$ to the carbon is approximately 98.7 : 1.3.

The material has a transparent, lateral growth crystalline atomic structure. The crystallite particle size is in the range of from 0.75 nm to 1.75 nm. In one example the crystallite particle size is approximately 1 nm. The lateral film growth of the sulfur doped $TiO_2$ aids in the smoothness and transparency of coating layers or films comprising the material, and thus maintains the aesthetic quality of an underlying surface or substrate upon which the coating layer or film is applied.

The material is soluble to facilitate dissolving of the material in a solvent without requiring any dispersants to form a true solution. In this case the material is soluble to facilitate dissolving of the material in a solvent selected from the group comprising water, acetone, trifluoroacetic acid, ethyl acetate, 3-propanone, glacial acetic acid, and tetrahydrofuran. Because of the small particle size, the material may form a true solution, and smooth, uniform films of multi-doped $TiO_2$ may be produced. In particular the material does not produce a colloidal solution in which $TiO_2$ is divided into particles and dispersed throughout a liquid. In a colloidal solution large particles remain suspended in the liquid due to charge interactions or by the addition of additives such as dispersants. The particles are much larger than those found in true solutions. The size of colloidal particles may be as large as for example 1000 nm. The process of the invention produces truely soluble S-doped $TiO_2$ resulting in a homogenous solution of $TiO_2$ in common solvents without the need for additives such as dispersants for stability. The solubility of the $TiO_2$ is dictated by its ability to dissolve in another compound, in this case a molecular liquid. $TiO_2$ produced by the invention has the ability to fully dissolve in common solvents.

The material is photocatalytically active upon activation by visible light having a wavelength in the range of from 380 nm to 780 nm. The material absorbs visible light which causes activation of the material for the full life of the material. The photocatalytic activity of the material may have a number of forms. The photocatalytic functionality of the sulfur doped $TiO_2$ film material may include photocatalytic degradation of matter and photocatalytic induced hydrophilicity. In relation to photocatalytic degradation of matter, the material may generate reactive oxygen species, such as hydroxyl radicals and/or superoxide ions, upon activation by visible light. The reactive oxygen species degrade organic matter, such as microbiological matter. Because of the antimicrobial activity of the material, the material and a surface to which the material is applied may thus be easier to clean. An application for the multi-doped $TiO_2$ material is as a biocide.

The material may reduce the concentration of pollutant gases, such as nitrogen oxides, sulphur oxides, carbon oxides, ammonia, volatile organic carbons, and tobacco smoke, upon activation by visible light. The material may inhibit formation of pollutant gases, such as nitrogen oxides, sulphur oxides, carbon oxides, ammonia, volatile organic carbons, and tobacco smoke, upon activation by visible light. The material may thus be used as an anti-odour and pollution control means for nitrogen oxides and sulphur oxides. An application for the multi-doped $TiO_2$ material is as an antipollution measure. The material of the invention may be employed to reduce the concentration of pollutant gases. In particular the degradation of $NO_2$, or more generally of NOx, is referred to as denitrogenization. This denitrogenization process may be described as a reaction on the surface of the activated $TiO_2$ particle with the reactive oxygen species $\cdot$OH:

$$NO_2 + OH \rightarrow NO_3^- + H^+$$

The free hydroxyl radical $\cdot$OH is generated on the $TiO_2$ surface by migration of a hole in the valence band in combination with the presence of water. The $\cdot$OH acts as a strong oxidant and oxidises $NO_2$ to the nitrate ion $NO_3^-$ which may be flushed from the surface as weak nitric acid. This reaction describes the photocatalytic process on the surface of the $TiO_2$ film.

The material of the invention may be employed to inhibit the formation of pollutant gases. In particular in a pollution rich environment UV solar radiation breaks down volatile hydrocarbons through a photochemical cycle. This triggers a series of chain reactions that result in the formation of peroxide radicals ($RO_2$). $RO_2$ radicals oxidise nitrogen monoxide producing $NO_2$. Each $RO_2$ radical catalyses the conversion of many NO molecules to $NO_2$ before finally extinguishing. The generated $NO_2$ will then go through photolysis to produce ozone, re-generating an NO molecule that becomes available for a new oxidation process. However, removal of $NO_2$ from the environment through reaction with OH, producing nitric acid, removes $NO_2$ from the photochemical cycle inhibiting the formation of further pollutant gases.

Battery testing of a wide range of dopants was examined and testing was carried out using ultraviolet light. Ultraviolet light was chosen for the testing due to the speed of generated results from a large number of coated samples in comparison to visible light testing.

Example 1: Ultraviolet light resazurin dye testing of the doped $TiO_2$ films.

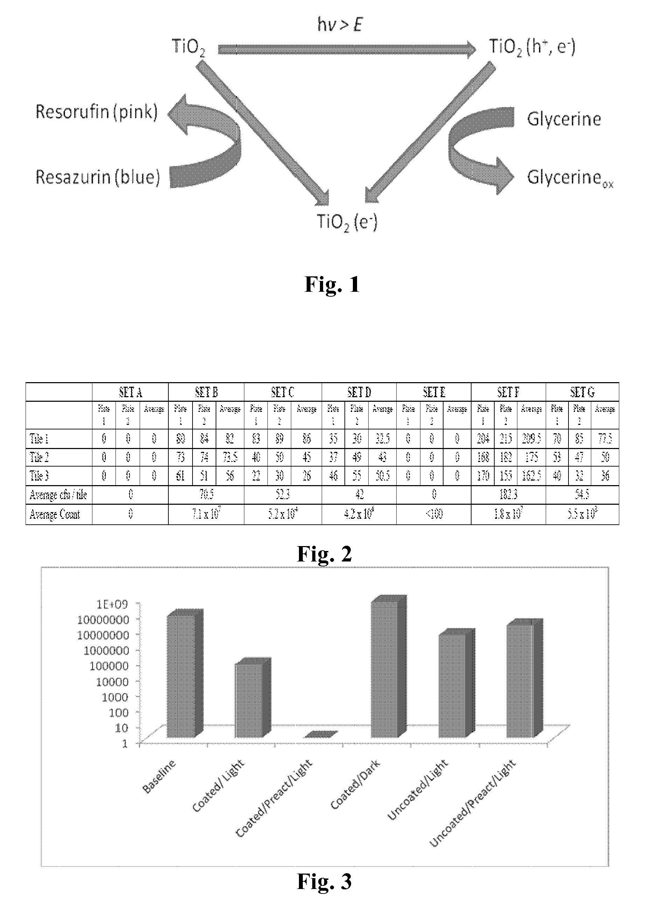

The photocatalytic ability of the deposited doped $TiO_2$ films was examined using UV lamps, 254 nm and 365 nm, to activate the films. The redox dye resazurin was used as the surrogate for testing. Resazurin was chosen for its photoreductive conversion to resorufin giving a dramatic blue to pink colour as illustrated in Fig. 1. Fig. 1 illustrates the photoreductive mechanism of resazurin dye. The substrate for the UV light testing was glass coupons. Nine dopants were tested: antimony, aluminum, copper, iron, niobium, nitrogen, silver, sulfur and vanadium, as well as undoped $TiO_2$. The best performing of these were sulfur and nitrogen doped $TiO_2$ films.

Example 2: Visible light resazurin dye testing of doped $TiO_2$ films.

Upon review of the UV resazurin dye results of Example 1, a number of the best performing films including N, S and Ag - doped $TiO_2$, as well as carbon doped $TiO_2$ were used in the next stage of testing. This next set of testing was used to evaluate the photoreductive ability of the films using visible light from a fluorescent light source. The substrate for this testing was ceramic tiles. Ceramic tiles were picked as the testing substrate due to the high annealing temperatures needed.

Following testing to optimize and investigate the nature of the films, multi-doped sulphur, fluorine and carbon doped $TiO_2$ films were considered to be the best performing, most economical and easiest to produce.

The apparent increase in visible light photocatalytic ability may be explained by the doping of the $TiO_2$ lattice with sulfur, nitrogen, carbon, fluorine or silver. The introduction of a dopant in this case reduces the band gap allowing easier promotion of electrons from the valance shell to the conduction band. This reduction in the band gap is brought about by moving the wavelength that $TiO_2$ can absorb electromagnetic energy, that is moving its absorbance into the visible light spectrum.

Example 3: Visible light microbiological testing of multi-doped $TiO_2$ films.

$TiO_2$ is a photocatalyst which absorbs ultraviolet radiation from sunlight or an illuminated light source and in the presence of water vapour produces hydroxyl radicals and superoxide ions. The hydroxyl radicals are strong oxidisers and attack many organic materials causing cell damage and death. A ceramic tile coated with $TiO_2$ and exposed to a light source shows a decrease in a bacterial load when compared to an uncoated ceramic tile or even a $TiO_2$ coated ceramic tile unexposed to a light source.

The next set of testing carried out on the $TiO_2$ films were microbiological survival trials with multi-doped $TiO_2$ films. Coated ceramic tile samples were provided and testing conditions carried out under a desktop fluorescent lamp. The results were positive in relation to the films ability to absorb visible light, generate reactive oxygen species (ROSs) which subsequently kill bacteria for Staphylococcus aureus and Escherichia coli. Results of the Escherichia coli survival testing are illustrated in Figs. 2 and 3 where:

    Set A: Sterility control
    Set B: Baseline
    Set C: Coated sample with light
    Set D: Uncoated sample with light
    Set E: Coated sample with preactivation and light
    Set F: Uncoated sample with preactivation and light
    Set G: Coated sample in darkness

Example 4: Visible light $NO_2$ gas detection testing.

The target pollutant gas selected for detection was $NO_2$, which is a common pollutant gas found in the environment. $NO_2$ may be more harmful than $CO_2$ and may cause eye irritation, respiratory illness, arterial sclerosis and may be carcinogenic.

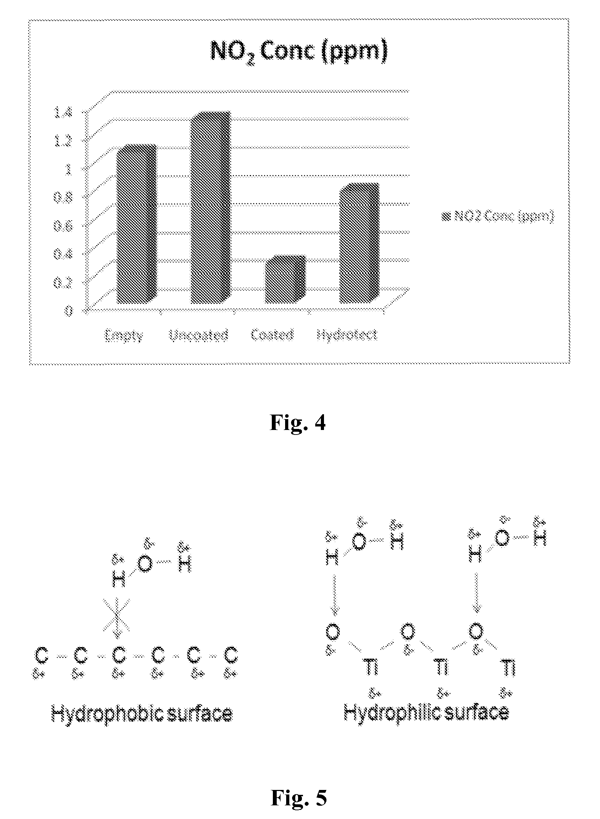

The testing evaluated the reduction of $NO_2$ concentration in a reaction vessel, with a controlled environment, by the presence of a coated sample of the material of the invention, a sample of another tile, and an uncoated tile using a desktop fluorescent lamp as the light source. These results were compared to an empty vessel as the baseline. Fig. 4 illustrates the calibration of response versus $NO_2$ concentration. The presence of the coated tiles of the invention resulted in a 73% drop in $NO_2$ concentration in comparison to the empty vessel. The other tile samples caused a 26% drop in $NO_2$ concentration meaning the coated tiles of the invention is 280% more efficient at the removal of $NO_2$ from the environment than the other tile samples. The coated tiles of the invention may also eliminate other atmospheric pollutants such as volatile organic carbons (VOC), ammonia and tobacco smoke. The removal of these unwelcome and damaging odours and the inhibition of their formation may have a particular application for sanitary, kitchen and common areas.

In relation to the photocatalytic induced hydrophilicity, the material may become superhydrophilic upon activation by visible light. In particular in the case where a coating layer comprising the material is applied to a structural component, the contact angle defined between a droplet of a liquid resting upon the surface of the coating layer and the surface of the coating layer may be less than 25°, and in this case is less than 5°. Because of the hydrophilic nature of the material, the material and a surface to which the material is applied may thus be easier to clean.

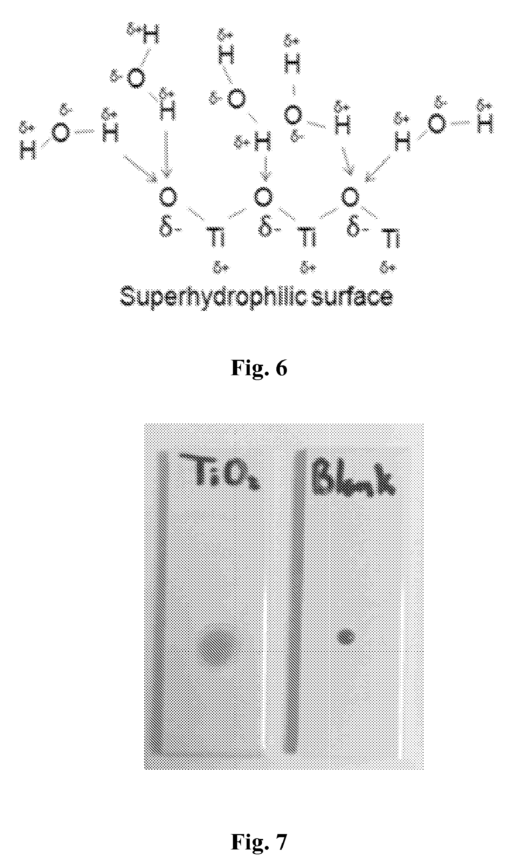

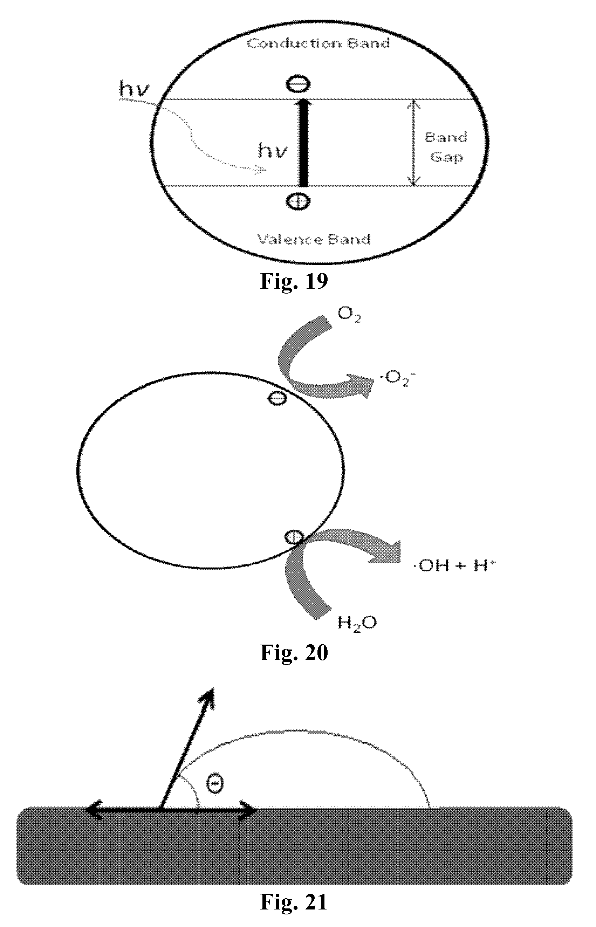

Untreated surfaces such as ceramic tiles may have a hydrophobic surface which repels water forming droplets. Contaminated liquids that come in contact with ceramic surfaces form droplets, which over time evaporate leaving dirt remaining behind on the tile surface. Hydrophilic surfaces made with $TiO_2$ attract water to the surface through hydrogen bonding as illustrated in Fig. 5. Fig. 5 illustrates the difference between hydrophilic and hydrophobic surfaces. Films produced by the sulfur doped $TiO_2$ due to the higher activity and improved charge generation lead to 'superhydrophilic' surfaces. This causes a greater attraction with water as illustrated in Fig. 6 due to increased hydrogen bonding. The water lies flat on the surface in sheets instead of forming droplets. Dirt particles on the surface are picked up by the water and washed down in the sheet of water. The contact angle is the angle at which a liquid meets a solid surface, as illustrated in Fig. 21. If the liquid is attracted to the surface the droplet will spread out on the surface. This produces a small contact angle. If water has a small contact angle with a surface, the surface is said to be hydrophilic. If the water has a large contact angle, the surface is said to be hydrophobic. Fig. 21 illustrates the contact angle of a droplet. Measuring the contact angle between the water droplet and the surface reveals the hydrophilicity of the surface, as illustrated in Fig. 7. Untreated ceramic tiles are hydrophobic and may have an average contact angle of 46°. Other $TiO_2$ coated tiles may produce contact angles of 25° while films produced by the sulfur doped $TiO_2$ of the invention may have contact angles as low as 2° to 4°. Fig. 7 illustrates the superhydrophilicty of the sulfur doped $TiO_2$ coated tiles. A goniometer instrument may be used to measure the contact angle, which uses cameras and software to capture and analyze the drop shape. Multi-doped $TiO_2$ films of the invention, due to their higher activity and improved charge generation, lead to 'superhydrophilic' surfaces, as illustrated in Fig. 7. Fig. 7 illustrates the superhydrophilicty of multidoped $TiO_2$ coated tiles.

The production of the soluble doped titanium dioxide material may involve a six step process:

Step 1: Hydrolysis
Step 2: Neutralisation
Step 3: Washing and Drying
Step 4: Solubilising
Step 5: Doping
Step 6: Annealing

Steps 1-3 are involved in the formation of hydrous $TiO_2$. The first two steps of the process play a role in determining the size of the particle produced. If poor heat regulation is employed during the Hydrolysis and Neutralisation steps the hydrous $TiO_2$ may not dissolve during the Solubilising step. This is due to the particle size growing beyond a critical point. Steps 4 and 5 involve non-metal doping. Step 6 of the process is responsible for the generation and adhesion of the film to a substrate as well as multi-doping of both cationic and anionic species in to the $TiO_2$ lattice.

To form the doped photocatalytic material, the $TiO_2$ is formed initially before adding the non-metal dopants. The $TiO_2$ is formed by hydrolysis of a metal compound. In particular the metal compound is added to an alcohol to form an hydrolysis product. Step 1 involves the reaction of $TiCl_4$ (titanium tetrachloride) in the alcohol which may be isopropyl alcohol to produce $Ti(OPr)_4$ (titanium isopropoxide) and HCl (hydrochloric acid) or collectively called the hydrolysis product (HP) in an ice bath, see equation 1.

$$\text{Equation 1: } TiCl_4 + HOPr \rightarrow Ti(OPr)_4 + 4HCl$$

The addition of the $TiCl_4$ to the alcohol reduces the exothermic nature of the reaction in comparison to $H_2O$, rendering it more industrially friendly as well as helping to maintain a small particle size.

The hydrolysis product is neutralised by adding the hydrolysis product to an alkali to form a neutralisation product. Step 2 involves the reaction of the HP with NaOH (sodium hydroxide) until a pH of 6 - 6.2 is achieved to produce

hydrous $TiO_2$ ($TiO_2.H_2O$), NaCl (sodium chloride) and $H_2O$ (water) or collectively called the neutralisation product (NP), see equation 2. The reaction is again carried out in an ice bath to maintain a small particle size.

$$\text{Equation 2: } Ti(OPr)_4 + HCl + NaOH \rightarrow TiO_2.H_2O + 4NaCl + H_2O$$

The neutralisation product is washed, and the neutralisation product is dried to form a hydrous $TiO_2$. In Step 3 the large amount of NaCl by-product produced during the neutralisation step is removed. An extensive washing process using deionised $H_2O$ is conducted to reduce the NaCl content to between 200 p.p.m. and 600 p.p.m.. The washed hydrous $TiO_2$ is then dried.

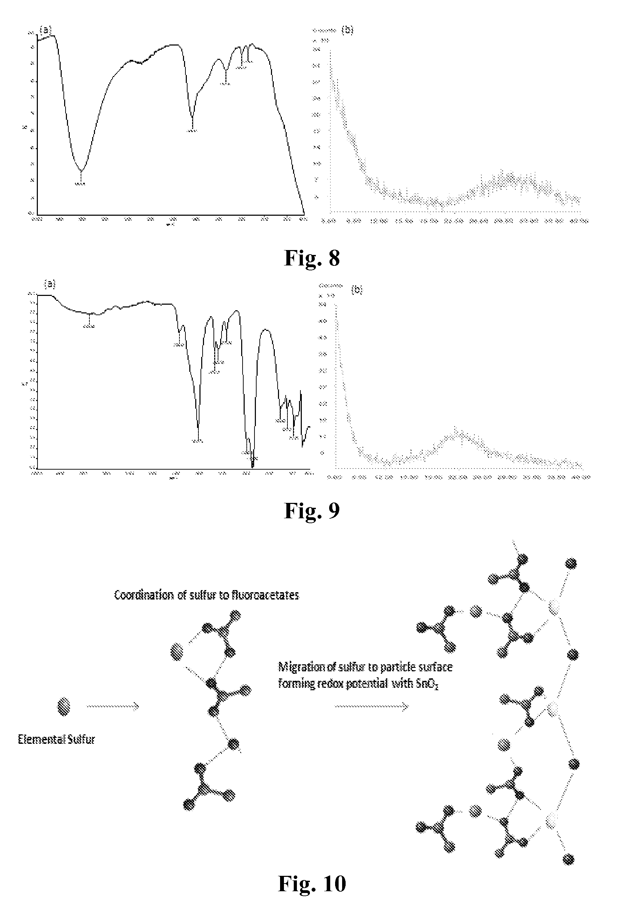

The hydrous $TiO_2$ at the end of this step may be analysed using infrared (IR) and x-ray diffraction (XRD). Fig. 8(a) illustrates the IR spectrum and Fig. 8(b) illustrates the XRD pattern of the washed and dried hydrous $TiO_2$. The IR spectrum (Fig. 8(a)) reveals the characteristic O-H stretch giving a broad peak at $3230 cm^{-1}$ and a H-O-H bend at $1635 cm^{-1}$ from both coordinated and uncoordinated $H_2O$ confirming the $TiO_2$ is hydrous in nature. The XRD pattern (Fig. 8(b)) reveals anatase to be the dominant phase of $TiO_2$ present with a broad bend observed in the $2\Theta$-region of 20-40°.

The $TiO_2$ is solubilised before adding the non-metal dopants by adding the $TiO_2$ to an organic acid. The organic acid may be selected from the group comprising trifluoroacetic acid, trichloroacetic acid, tribromoroactic acid, triiodoacetic acid, cyanoacetic acid, formic acid, acetic acid, propanoic acid, butanoic acid, fluoroacetic acid, difluoroacetic acid, fluorinated formic acid, fluorinated propanoic acid, fluorinated butanoic acid, chloroacetic acid, dichloroacetic acid, chlorinated formic acid, chlorinated propanoic acid, chlorinated butanoic acid, bromoacetic acetic acid, dibromoacetic acid, brominated formic acid, brominated propanoic acid, brominated butanoic acid, iodoacetic acetic acid, diiodomoacetic acid, and iodinated formic acid. In this case the organic acid comprises trifluoroacetic acid. Step 4 involves the solubilising of the dried hydrous $TiO_2$ in TFA (trifluoroacetic acid), see equation 3.

During this step the trifluoroacetic acid molecules coordinate to the surface of the $TiO_2$ particle displacing $H_2O$ rendering the $TiO_2$ soluble.

$$\text{Equation 3: } TiO_2.H_2O + TFA \rightarrow TiO_2/TFA + H_2O$$

The mixture of the $TiO_2$ and the organic acid are refluxed. The $TiO_2$ is first refluxed in the TFA until fully dissolved; excess TFA is then removed leaving the soluble $TiO_2$/TFA material.

There are two important parameters for solubilising in this step: the dryness of the hydrous $TiO_2$ - a correct level of coordinated $H_2O$ to $TiO_2$ particle is critical; and the particle size - the smaller the particle size of the hydrous $TiO_2$ the easier to solubilise the material.

Fig. 9(a) illustrates the IR spectrum and Fig. 9(b) illustrates the XRD pattern of the solubilised $TiO_2$. The IR spectrum (Fig. 9(a)) reveals the characteristic trifluoroacetate peaks illustrating their surface bound coordinated nature. The XRD pattern (Fig. 9(b)) reveals the $TiO_2$ crystal phase of anatase is retained with a slight sharpening of the band due to the crystal growth during the solubilising at 80°C.

The solubilising process of the $TiO_2$ is possible because of the small particle size for example 1 nm. During solubilising of the $TiO_2$, sufficient organic molecules are attached to the particle and this new organic constituent of the particle enables it to be then soluble in common solvents. Large agglomerated particles would not be solubilised by an organic acid. For larger particles the coordination sites for the organic acids are reduced and the decrease in organic content reduces solubility.

The three non-metal dopants are added in powder form to the refluxed mixture of the $TiO_2$ and the organic acid to form a doped product before annealing the doped product. In this case the first non-metal dopant comprises sulfur, the second non-metal dopant comprises fluorine, and the third non-metal dopant comprises carbon.

Step 5 involves the doping of the soluble $TiO_2$/TFA with the non-metal, such as sulfur, see equation 4. The soluble $TiO_2$/TFA is first dissolved in acetone and elemental sulfur powder is added.

$$\text{Equation 4: } TiO_2/TFA + S \rightarrow S/TiO_2/TFA$$

The doped product is refluxed before annealing. The mixture is refluxed for 3-4 hours and then isolated.

The doping process occurs because the trifluoroacetate groups coordinated to the $TiO_2$ particle act as secondary coordination species coordinating to the sulfur as illustrated in Fig. 10. The sulfur migrates to the surface of the $TiO_2$ particle where the redox potential generated introduces or dopes the sulfur into the $TiO_2$ crystal lattice. Any remaining surface coordinated sulfur will be doped into the $TiO_2$ crystal lattice during the annealing process at a temperature of from 500°C to 1000°C utilising the energy from the elevated temperature. Fig. 10 illustrates the sulfur doping mechanism.

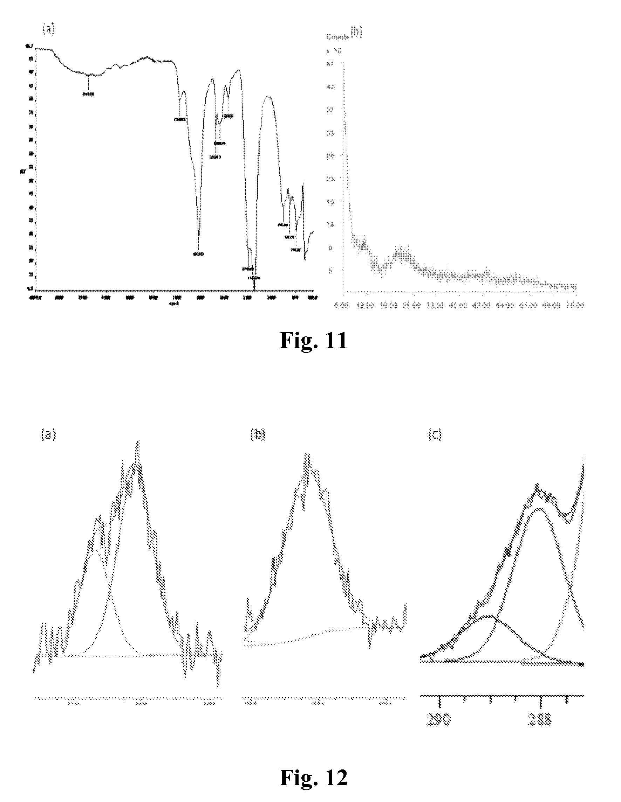

Fig. 11(a) illustrates the IR spectrum and Fig. 11(b) illustrates the XRD pattern of the sulfur doped $TiO_2$/TFA. The IR spectrum (Fig. 11(a)) confirms that the trifluoroacetate groups are still coordinated after the doping process indicating the sulfur doping did not affect the trifluoroacetate content of the $TiO_2$ particles. The XRD pattern (Fig. 11(b)) also reveals the anatase $TiO_2$ crystal structure remains unchanged during the doping process.

The doped product is applied to a surface such as a surface of a ceramic tile element or a glass element by any suitable method, for example dip coating, or spray coating, or spin coating, before annealing.

The following procedure may be employed for dip coating:

Clean, dry and dust free substrates are inspected and prepared for dip coating. The solution for deposition is poured into a glass beaker and placed on a dip coating rig. The controls of the dip coating rig are set to the required immersion speed, dwell time and withdrawal speed. The substrate is gently clamped into the dip coating machine and ensuring that the trailing edge of the substrate is totally horizontal to minimize non-uniform deposition of the film. The coated substrate is unclamped and left to dry with an uncoated edge leaning against a block. The substrates are allowed to dry for 1-2 hours. The dry substrates are placed uniformly on a wrought iron frame and placed in a furnace. The substrates are heated to the required temperature, with a rate of heating of 10°C per minute, and maintained for one hour.

The following procedure may be employed for spray coating:

Clean, dry and dust free (100mm x 100mm) ceramic substrates are inspected and prepared for spray coating, the substrate is held vertically in place in a fumehood. The spray solution for deposition is poured into the reservoir of the spray gun and the spray gun is connected up to a 2HP Fox model air compressor. The air compressor is switched on and the air pressure is allowed to build to 1 MPa and a working pressure of 0.8 MPa - 1 MPa is maintained during coating. The volume and type of spray are adjusted to the desired level; spray coating is at all times carried out in a vented fumehood. The substrate may be spray coated by a single pass or with multiple passes of the spray gun. The coated substrate is unclamped and left to dry with an uncoated edge leaning against a block. The substrates are allowed to dry for 1-2 hours. The dry substrates are placed uniformly on a wrought iron frame and placed in a furnace. The substrates are heated to the required temperature, with a rate of heating of 10°C per minute, and maintained for one hour.

The following procedure may be employed for spin coating:

Clean, dry and dust free (10mm x 10mm) silica coated glass coupons are inspected and prepared for spin coating. Samples were placed in a Chemat spin coater. 0.3 $cm^3$ of the coating solution is dropped from a pipette an inch above the glass coupon while the coupon is rotating at 300 rpm. This rotation is maintained for 10 seconds before a second rotation of 2000 rpm for 30 seconds is carried out. The coated substrate is then removed and left to dry in a dust free environment for 24 hours. The dry substrates are placed uniformly on a wrought iron frame and placed in a furnace. The substrates are heated to the required temperature, with a rate of heating of 10°C per minute, and maintained for one hour.

Deposition of the sulfur doped $TiO_2$ material on to the substrates may be carried out by dip coating, or spin coating, or spray coating, or roller coating, or flow coating. The material may be deposited on ceramic tiles, or glass, or stainless steel.

The doped product applied to the surface is then annealed at a temperature in the range of from 500°C to 1000°C. In this case the doped product is annealed at a temperature of approximately 600°C. Step 6 involves the deposition of the sulfur doped $TiO_2$/TFA on to a substrate surface, for example a ceramic tile and annealing of the material on to that surface. Deposition may be carried out using tradition sol-gel techniques such as dip, spray, spin coating. Annealing may be performed in a conventional furnace oven between temperatures of 500°C and 1000°C. During annealing the heating process sinters the particles together to form a homogenous film as well as bonding the film to the substrate surface forming a durable chemically resistance film. Annealing also leads to multi-doping of the already sulfur doped $TiO_2$. This is due to the thermal decomposition of the surface trifluoroacetate groups and migration of carbon and fluorine atoms into the $TiO_2$ lattice.

Non-metal dopants such as sulfur, nitrogen and phosphorus may be selectively added to the $TiO_2$ in the doping step of the manufacturing process. Nitrogen may be added by means of a nitrogen containing ligand. Non-metal dopants such as carbon, fluorine, chlorine, bromine and iodine may be automatically added to the $TiO_2$ integrated as dopants into the $TiO_2$ lattice as a result of the annealing process. The resulting multi-doped material results in enhanced photocatalytic activity.

The dopant to be introduced into the $TiO_2$ lattice may be determined by selecting the appropriate organic acid to be used during the solubilising step. For example to achieve chlorine doping trichloroacetic acid may be used as the organic acid; to achieve fluorine doping trifluoroacetic acid may be used as the organic acid; to achieve fluorine doping tribromoroactic acid may be used as the organic acid; to achieve iodine doping triiodoacetic acid may be used as the organic acid; to achieve nitrogen doping cyanoacetic acid may be used as the organic acid; to achieve carbon doping formic acid, or acetic acid, or propanoic acid, or butanoic acid may be used as the organic acid; to achieve carbon/ fluorine doping fluoroacetic acid, or difluoroacetic acid, or trifluoroacetic acid, or fluorinated formic acids, or fluorinated propanoic acids, or fluorinated butanoic acids may be used as the organic acid; to achieve carbon/chlorine doping chloroacetic acid, or dichloroacetic acid, or trichloracetic acids, or chlorinated formic acids, or chlorinated propanoic acids, or chlorinated butanoic acids may be used as the organic acid; to achieve carbon/bromine doping bromoacetic acetic acid, or dibromoacetic acid, or tribromoacetic acids, or brominated formic acids, or brominated propanoic acids, or brominated butanoic acids may be used as the organic acid; to achieve carbon/iodine doping iodoacetic acetic acid, or diiodomoacetic acid, or triiodoacetic acids, or iodinated formic acids, or brominated propanoic acids, or brominated butanoic acids may be used as the organic acid.

After annealing substantially all of the $TiO_2$ may be in rutile phase. Alternatively after annealing substantially all of the $TiO_2$ may be in anatase phase. Alternatively after annealing part of the $TiO_2$ may be in rutile phase and part of the $TiO_2$ may be in anatase phase. After annealing the sulfur dopant comprises a cationic dopant, the carbon dopant comprises a cationic dopant, and the fluorine dopant comprises an anionic dopant.

During the doping mechanism sulfur is introduced as a cation into the $TiO_2$ lattice, the titanium atom is substituted for a sulfur atom and the sulfur forms sulfur - oxygen bonds. Carbon doping of $TiO_2$ occurs in a similar manner. It is believed that a similar cationic substitution would occur with phosphorus. The doping of nitrogen, fluorine, chlorine, bromine and iodine into the $TiO_2$ lattice occurs by adding as anions. These elements substitute the oxygen atoms and form for example fluorine - titanium bonds. The process of the invention enables multi-doping of $TiO_2$ with a wide range of non-metal dopants in both anionic and cationic fashions.

An X-ray Photoelectron Spectroscopy (XPS) survey spectrum was carried out on the sulfur doped $TiO_2$ films annealed at 600°C. The XPS measures the elemental composition, empirical formula, chemical state and electronic state of the elements present in a sample. The spectra are obtained by irradiating a material with a beam of X-rays while simultaneously measuring for characteristic kinetic energy (KE) peaks for each element. Fig. 12 illustrates the presence of sulfur, fluorine and carbon doping of $TiO_2$ in the final multi-doped film. Fig. 12 illustrates the XPS spectra (a) sulfur (S 2p), (b) fluorine (F Is) and (c) carbon (C Is).

The S 2p spectra (see Fig. 12(a)) may be deconvoluted into two peaks - these appear as a doublet of $2p_{3/2}$ and $2p_{1/2}$. The S 2p spectra shows a narrow peak is fitted with two component peaks to represent the doublet with an intensity ratio 2: 1 and the characteristic doublet separation for S 2p. The binding energy suggests sulfur is present in a single + 6 oxidation state and has entered the lattice as a cationic dopant replacing Ti $^+$ions. The F 1s spectra (see Fig. 12(b)) is composed of a single peak. The peak at a binding energy of 684.3 eV is characteristic of fluoride ions (F-) in the form of anionic Ti-F bonds in the $TiO_2$ lattice. The C 1s spectra results (see Fig. 12(c)) indicate the main C 1s XPS peak (288.0 eV) maybe assigned to a Ti-O-C structure in carbon-doped titania by substituting some of the lattice titanium atoms by cationic carbon. In addition, the smaller component at a binding energy of 289.1 eV may be attributed to O=C-O components.

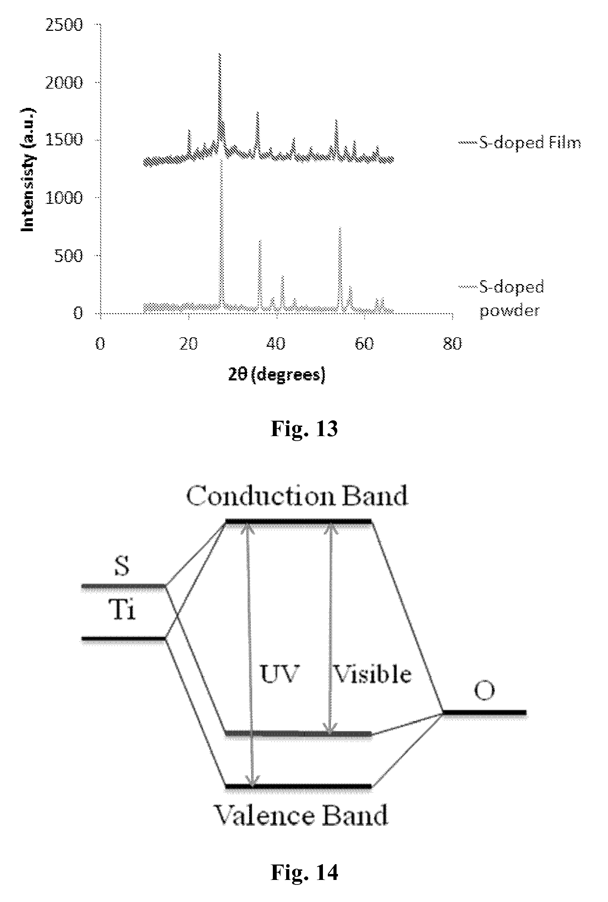

Fig. 13 illustrates the XRD patterns of the sulfur doped $TiO_2$ film applied to a ceramic tile and a sulfur doped $TiO_2$ powder heated to 800°C. Fig. 13 illustrates that the doped $TiO_2$ crystal structure is still maintained on the coated surface of the ceramic tile in comparison to doped $TiO_2$ powder. This indicates that the doped $TiO_2$ produced during the process described herein is not chemically modified due to deposition on to a surface or substrate, and that the functionality of the sulfur doped $TiO_2$ is maintained in film form. The bands have sharpened due to the crystal growth resulting from the annealing temperature of 800°C and the additional minor bands are from the underlying clay. Further analysis by wavelength dispersive x-ray spectroscopy (WDS) revealed that the concentration of sulfur present in the sulfur doped $TiO_2$ films to be 0.25%.

Titanium dioxide is a semi-conductor material with a wide band gap of 3.0 eV. The band gap therefore requires a photon of energy, with this amount energy (hv), to excite an electron from the valence shell through the band gap and into the conduction band. This promotion of the electron also generates a hole in the valence band, as illustrated in Fig. 19. Fig. 19 illustrates photoexcitation of an electron. The electron and hole migrate to the surface of the titanium dioxide particle catalyzing the reaction of an oxygen molecule to form a superoxide ion radical ($\cdot O_2^-$) as well as the transformation of a water molecule to form a hydroxyl radical ($\cdot OH$), as illustrated in Fig. 20. These reactive oxygen species then react with organic material breaking them down into $CO_2$ and $H_2O$. Fig. 20 illustrates generation of reactive oxygen species. Titanium dioxide due to its wide band gap may only be activated by ultraviolet (UV) light. UV activation has many drawbacks. The increased functionality of the doped material of the invention is due to the doping of $TiO_2$ which creates an impurity energy level in the original band gap. This shortens the band gap allowing lower energy photons of visible light to activate the $TiO_2$ as illustrated in Fig. 14. This allows for the photoresponse of $TiO_2$ by visible light as illustrated in Fig. 14. Fig. 14 illustrates the doping of the $TiO_2$ with sulfur.

The material of the invention may be activated by visible light. Because of the band gap of the material of the invention, this enables a greater percentage of the radiant solar energy available to be utilised in comparison to absorption of UV light with a wavelength less than 380 nm.

The doped $TiO_2$ material of the invention reduces the band gap of $TiO_2$ thus allowing photoactivition by visible light. The band gap of $TiO_2$ is reduced so that lower energy photons from higher wavelengths, in this case visible light with a wavelength greater than 380 nm, may cause activation. The material of the invention may thus enjoy increased functionality. The material of the invention allows photoactivation of $TiO_2$ by normal incandescent/fluorescent indoor lighting giving the surface antibacterial, anti-pollution/odour, self-cleaning properties. Fluorescent and incandescent indoor lighting emit minimal UV light. Outdoors the material of the invention utilizes a far greater amount of the radiant solar energy giving a greater performance level than conventional materials.

The multi doping of $TiO_2$ may be a two step process involving an initial doping of the soluble $TiO_2$ with a non-metal, such as sulphur:

$$TiO_2/TFA + S \rightarrow S/TiO_2/TFA$$

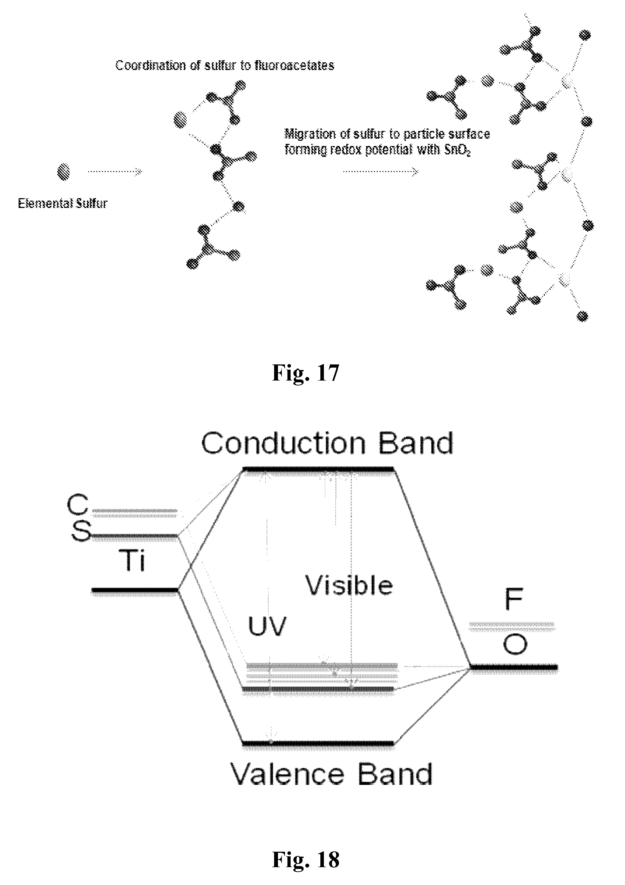

The mechanism of doping occurs due to the trifluoroacetate groups, coordinated to the $TiO_2$ particle, acting as a secondary coordination species to the sulphur, as illustrated in Fig. 17. The sulfur migrates to the surface of the $TiO_2$ particle where the redox potential generated introduces or 'dopes' the sulfur into the $TiO_2$ crystal lattice. Fig. 17 illustrates the sulfur doping mechanism.

The increased functionality of the doped material is due to this doping of $TiO_2$. The doping of sulfur creates an impurity energy level in the original band gap. This in effect shortens the band gap allowing lower energy photons of visible light to activate the $TiO_2$, as illustrated in Fig. 14. Fig. 14 illustrates the doping of $TiO_2$ with sulfur.

The second doping step to form multi doped $TiO_2$ occurs during annealing to the substrate. The thermal decomposition of the surface trifluoroacetate complexes leads to the migration of carbon and fluorine atoms into the $TiO_2$ lattice and the substitution of carbon and fluorine for oxygen and titanium respectively.

In comparison to doping with single non-metals, doping with the appropriate combination of dopants results in a more visible light sensitive $TiO_2$. It therefore increases the promotion of electron-hole separation and subsequently enhances the photoactivity, as illustrated in Fig. 18. Fig. 18 illustrates the multi-doping of $TiO_2$.

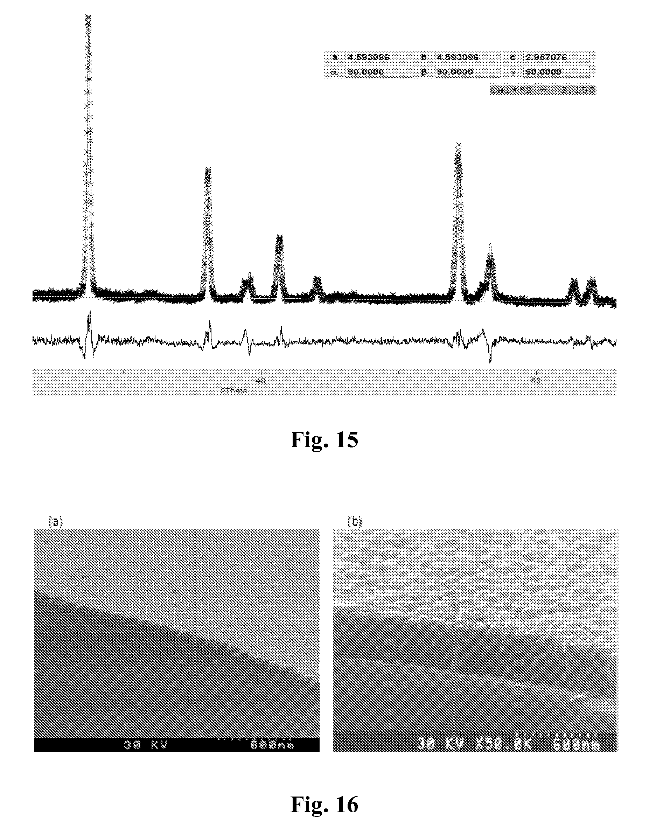

The process of preparation of the particles and the sol-gel method of deposition of the material onto a surface lead to the crystals growing in a lateral manner. The lateral growth of the material forming the film reduces cracking and delaminating while also contributing to the homogeny. The preferred lateral growth orientation is evident from X-ray Diffraction (XRD) analysis illustrated in Fig. 15 as the unit cell parameters deviate from those common to rutile $TiO_2$ or to anatase $TiO_2$. Fig. 15 illustrates the XRD analysis of the multidoped $TiO_2$ material.

The production of smooth, uniform films due to the reduced particle size and the lateral growth of the particles is illustrated in Fig. 16. The films produced by the solubilising process of the invention have a number of significant physical advantages in comparison to other film production processes. Fig. 16(a) illustrates a film produced by the solubilising process of the invention, and Fig. 16(b) illustrates a film produced by another film production process. Fig. 16(b) illustrates the columnar nature of a film produced by another film production process which is in contrast with that found in a film produced by the solubilising process of the invention where lateral growth is evident ensuring the smooth features of the film. Surface roughness would diffract light reducing the transparency and affecting the visual quality of an underlying surface such as a ceramic tile or substrate. The enhanced smoothness and uniformity of the material of the invention increases the clarity of the film and maintains the aesthetic quality of the underlying surface such as a ceramic tile or substrate.

As a consequence of the ultra small particle size, very smooth, uniform films of S-doped $TiO_2$ may be produced as illustrated in Fig. 16. The added smoothness and uniformity increases the clarity of the film resulting in no decrease in the aesthetic quality of the underlying ceramic tile, or substrate or the like. A film with surface roughness would diffract light reducing the transparency and affecting the visual quality of the underlying ceramic tile, or substrate or the like.

The process of the invention for producing soluble $TiO_2$ has a number of advantages. It is not necessary to add chemical dispersants to ensure the stability of the solution. Therefore the solubilisation is a simple one step process with reduced cost. During formation of the film at the annealing stage, chemical impurities that are present could be incorporated into the film. These impurities may have a detrimental effect on the functionality of the films.

The doped photocatalytic material may be used in a variety of applications. For example the material may be used as part of a coating layer for coating at least part of a surface of a structural component, such as at least part of a surface of a tile element and/or at least part of a surface of a glass element and/or at least part of a surface of a stainless steel element, or used as part of grout for grouting a cavity. For example the material may be used as a photocatalyst for degrading organic matter, such as microbiological matter, and/or for reducing the concentration of pollutant gases, and/or for inhibiting formation of pollutant gases.

The sulfur doped $TiO_2$/TFA material may be modified and added to grouting adhesive or to a glaze to give an integrated photocatalytic product displaying biocidial and antipollution functionality.

The sulfur doped $TiO_2$/TFA material may first be heated to 600°C for 5 hours to remove the surface coordinated triflouroacetate groups producing sulfur doped $TiO_2$. The removal of the triflouroacetate groups may be necessary as it may affect the integration into the base material for example a glaze or an adhesive. The heated material is left to cool and is ground with a mortar and pestle. The ground sulfur doped $TiO_2$ may then be added as a constituent of the glaze and dispersed by a homogeniser or to grouting adhesive and ground together with a mortar and pestle. The amount of sulfur doped $TiO_2$ powder added to the adhesive/glaze requires the base material to be rendered photocatalytic but without reducing the aesthetic of the glaze or the functionality of the grouting adhesive.

In the embodiment of the invention described above, the material comprises three dopants with each dopant being a non-metal. However it will be appreciated that the material may comprise two or more dopants with at least one of the dopants being a non-metal and with at least one of the dopants being a metal.

In the embodiment of the invention described above, the three non-metal dopants are added to the refluxed mixture of the $TiO_2$ and the organic acid to form a doped product before annealing the doped product. However it will be appreciated that in an alternative embodiment, one or more metal dopants may be added to the refluxed mixture of the $TiO_2$ and the organic acid to form a doped product before annealing the doped product. One or more non-metal dopants may then be added to the metal doped $TiO_2$ during the step of annealing the doped product. During annealing the heating process sinters the particles together to form a homogenous film. The annealing leads to multi-doping of the already metal doped $TiO_2$. This is due to the thermal decomposition of the surface trifluoroacetate groups and migration of the non-metal atoms, such as carbon and fluorine, into the $TiO_2$ lattice.

The invention is not limited to the embodiment hereinbefore described, with reference to the accompanying drawings, which may be varied in construction and detail.

**Claims**

1. A doped material comprising
   a metal oxide, and
   one or more dopants,
   at least one of the dopants being a non-metal,
   the material being soluble to facilitate dissolving of the material in a solvent to form a solution.

2. A material as claimed in claim 1 wherein the metal of the metal oxide is selected from the group comprising titanium (Ti), tin (Sn), tungsten (W), and zirconium (Zr).

3. A material as claimed in claim 2 wherein the metal oxide is selected from the group comprising $TiO_2$, $SnO_2$, $WO_3$, and $ZrO_2$.

4. A material as claimed in any of claims 1 to 3 wherein the non-metal dopant is selected from the group comprising sulfur, carbon, nitrogen, phosphorus, fluorine, chlorine, bromine, iodine, selenium, and astatine.

5. A material as claimed in any of claims 1 to 4 wherein the material comprises at least two non-metal dopants.

6. A material as claimed in any of claims 1 to 5 wherein the material is soluble to facilitate dissolving of the material in a solvent selected from the group comprising water, acetone, trifluoroacetic acid, ethyl acetate, 3-propanone, glacial acetic acid, and tetrahydrofuran.

7. A material as claimed in any of claims 1 to 6 wherein the material has a crystalline atomic structure.

8. A material as claimed in claim 7 wherein the material has a lateral growth crystalline atomic structure.

9. A material as claimed in claim 7 or 8 wherein the crystallite particle size is in the range of from 0.75 nm to 1.75 nm.

10. A material as claimed in claim 9 wherein the crystallite particle size is approximately 1 nm.

11. A material as claimed in any of claims 1 to 10 wherein the material is a photocatalytic material.

12. A structural component comprising a doped material as claimed in any of claims 1 to 11.

**13.** A structural component as claimed in claim 12 wherein the structural component comprises a coating layer, the coating layer comprising a doped material as claimed in any of claims 1 to 11.

**14.** Use of a doped material as claimed in any of claims 1 to 11 for coating a surface.

**15.** Use of a doped material as claimed in any of claims 1 to 11 for grouting a cavity.

$hv > E$

$TiO_2$ → $TiO_2 (h^+, e^-)$

Resorufin (pink)

Resazurin (blue)

Glycerine

Glycerine$_{ox}$

$TiO_2 (e^-)$

**Fig. 1**

| | SET A | | | SET B | | | SET C | | | SET D | | | SET E | | | SET F | | | SET G | | |
|---|---|---|---|---|---|---|---|---|---|---|---|---|---|---|---|---|---|---|---|---|---|
| | Plate 1 | Plate 2 | Average | Plate 1 | Plate 2 | Average | Plate 1 | Plate 2 | Average | Plate 1 | Plate 2 | Average | Plate 1 | Plate 2 | Average | Plate 1 | Plate 2 | Average | Plate 1 | Plate 2 | Average |
| Tile 1 | 0 | 0 | 0 | 80 | 84 | 82 | 83 | 89 | 86 | 35 | 30 | 32.5 | 0 | 0 | 0 | 204 | 215 | 209.5 | 70 | 85 | 77.5 |
| Tile 2 | 0 | 0 | 0 | 73 | 74 | 73.5 | 40 | 50 | 45 | 37 | 49 | 43 | 0 | 0 | 0 | 168 | 182 | 175 | 53 | 47 | 50 |
| Tile 3 | 0 | 0 | 0 | 61 | 51 | 56 | 22 | 30 | 26 | 46 | 55 | 50.5 | 0 | 0 | 0 | 170 | 155 | 162.5 | 40 | 32 | 36 |
| Average cfu / tile | 0 | | | 70.5 | | | 52.3 | | | 42 | | | 0 | | | 182.3 | | | 54.5 | | |
| Average Count | 0 | | | $7.1 \times 10^7$ | | | $5.2 \times 10^4$ | | | $4.2 \times 10^6$ | | | <100 | | | $1.8 \times 10^7$ | | | $5.5 \times 10^3$ | | |

**Fig. 2**

**Fig. 3**

**Fig. 4**

**Fig. 5**

**Fig. 6**

**Fig. 7**

Fig. 8

Fig. 9

Coordination of sulfur to fluoroacetates

Migration of sulfur to particle surface
forming redox potential with $SnO_2$

Elemental Sulfur

Fig. 10

**Fig. 11**

**Fig. 12**

**Fig. 13**

**Fig. 14**

**Fig. 15**

**Fig. 16**

Coordination of sulfur to fluoroacetates

Migration of sulfur to particle surface
forming redox potential with $SnO_2$

Elemental Sulfur

**Fig. 17**

Conduction Band

C
S
Ti

Visible

UV

F
O

Valence Band

**Fig. 18**

**Fig. 19**

**Fig. 20**

**Fig. 21**

Europäisches
Patentamt

European
Patent Office

Office européen
des brevets

# EUROPEAN SEARCH REPORT

Application Number

EP 10 16 9370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 205 245 A1 (TOYODA CHUO KENKYUSHO KK [JP]) 15 May 2002 (2002-05-15)<br>* abstract *<br>* paragraphs [0010], [0047], [0049] *<br>* example 1 *<br>* figures 1,3 *<br>* claims 1-5 *<br>----- | 1-15 | INV.<br>B01J21/06<br>B01J27/20<br>B01J27/12<br>B01J27/02<br>B01J35/00<br>B01J35/02<br>B01J37/02 |
| X | WO 2007/117332 A2 (UNIV ILLINOIS [US]; XIE RONG-CAI [CN]; SHANG JIAN-KU [US]; WU PINGGUI) 18 October 2007 (2007-10-18)<br>* abstract *<br>* paragraphs [0007], [0009], [0010], [0017], [0063] *<br>* examples 1-18 *<br>* claims 1,5-7 *<br>----- | 1-15 | B01D53/00<br>C09D5/00 |

TECHNICAL FIELDS
SEARCHED      (IPC)

B01J
B01D
C09D

The present search report has been drawn up for all claims

| Place of search | Date of completion of the search | Examiner |
|---|---|---|
| Munich | 23 November 2010 | Fischbach, Malaika |

EPO FORM 1503 03.82 (P04C01)

## ANNEX TO THE EUROPEAN SEARCH REPORT
## ON EUROPEAN PATENT APPLICATION NO.

EP 10 16 9370

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2010

| Patent document cited in search report | | Publication date | Patent family member(s) | | Publication date |
|---|---|---|---|---|---|
| EP 1205245 | A1 | 15-05-2002 | EP 1205244 A1<br>WO 0110552 A1<br>WO 0110553 A1<br>JP 3498739 B2<br>US 6794065 B1<br>US 2002169076 A1 | | 15-05-2002<br>15-02-2001<br>15-02-2001<br>16-02-2004<br>21-09-2004<br>14-11-2002 |
| WO 2007117332 | A2 | 18-10-2007 | US 2007190765 A1 | | 16-08-2007 |

EPO FORM P0459

For more details about this annex : see Official Journal of the European Patent Office, No. 12/82